# EUROPEAN PATENT SPECIFICATION

(11) **EP 3 693 188 B1**
(45) Date of publication and mention of the grant of the patent: **02.06.2021**
(21) Application number: 20155433.4
(22) Date of filing: 04.02.2020
(51) Int. Cl.: B60C 11/03

(54) **TIRE**
REIFEN
PNEUMATIQUE

(30) Priority: 06.02.2019 JP 2019019991
(43) Date of publication of application: 12.08.2020
(73) Proprietor: Sumitomo Rubber Industries Ltd., Kobe-shi, Hyogo 651-0072 (JP)
(72) Inventor: NAKAJIMA, Koichi, Kobe-shi, Hyogo 651-0072 (JP)
(74) Representative: Manitz Finsterwald Patent- und Rechtsanwaltspartnerschaft mbB

(56) References cited:
- US-A1- 2012 216 930
- US-B1- 6 595 255
- US-S- D 316 695
- US-S- D 492 931

## Description

### BACKGROUND OF THE INVENTION

### Field of the Invention

The present invention relates to a tire having a tread portion. Description of the Background Art

JP 2018-030444 A discloses a tire having, in an outer tread portion, an outer main groove that zigzags continuously in the tire circumferential direction. The outer main groove has an outer groove wall and an inner groove wall that are inclined in the same direction relative to the tire radial direction. Therefore, the outer main groove has a large cross-sectional area to improve drainage performance.

US D 492,931 S discloses a tire according to the preamble of claim 1. US D 316,695 S, US 2012/0216930 A1 and US 6,595,255 B1 each show tread portions of tires.

In recent years, improvement of living environments and residential environments has required tires to improve noise performance as well as drainage performance.

The present invention has been made in view of the above-described circumstances, and a main object of the present invention is to provide a tire that allows improvement of drainage performance and noise performance.

### SUMMARY OF THE INVENTION

The present invention is directed to a tire that includes a tread portion having a first tread end. The tread portion has a first zigzag groove formed on the first tread end side and a main groove extending continuously in a tire circumferential direction. The first zigzag groove has bent elements which have projections projecting toward the first tread end and which are aligned in the tire circumferential direction. Each bent element has a first portion and a second portion that are inclined in opposite directions. An intersection of the first portion and the second portion on the first tread end side forms the projection. The projections of the bent elements are opened at the first tread end. The main groove is disposed so as not to connect to the first zigzag groove to avoid transmitting air resonance noise in the main groove into the first zigzag groove.

In the tire of the present invention, the first portion preferably has a first inner groove edge adjacent to the second portion. The second portion preferably has a second inner groove edge adjacent to the first portion. An outer end of the first inner groove edge in a tire axial direction and an outer end of the second inner groove edge in the tire axial direction are preferably disposed on the first tread end or preferably disposed inward of the first tread end in the tire axial direction.

In the tire of the present invention, an angle of each of the first portion and the second portion relative to the tire axial direction is preferably 30 to 70 degrees.

In the tire of the present invention, the first portion may extend linearly.

In the tire of the present invention, the second portion may have an arc shape that projects toward the first portion in each of the bent elements.

In the tire of the present invention, a formation range of the first zigzag groove in the tire axial direction is preferably 20% to 30% of a tread width.

In the tire of the present invention, the tread portion preferably has a sipe having a width of not greater than 1 mm. The sipe is preferably disposed in an intermediate region between the projections, of the first zigzag groove, which are adjacent to each other in the tire circumferential direction.

In the tire of the present invention, the tread portion preferably has a sipe having a width of not greater than 1 mm. The sipe is preferably disposed in an intermediate region, in the tire circumferential direction, of each bent element of the first zigzag groove.

In the tire of the present invention, preferably, the tread portion further includes a second tread end. The tread portion preferably has a second zigzag groove formed on the second tread end side. The second zigzag groove preferably has bent elements which have projections projecting toward the second tread end and which are aligned in the tire circumferential direction. The projections of the first zigzag groove and the projections of the second zigzag groove are preferably disposed at different positions in the tire circumferential direction.

In the tire of the present invention, the tread portion preferably has a sipe having a width of not greater than 1 mm. The sipe is preferably disposed in an intermediate region between the projections, of the second zigzag groove, which are adjacent to each other in the tire circumferential direction.

In the tire of the present invention, the tread portion preferably has a sipe having a width of not greater than 1 mm. The sipe is preferably disposed in an intermediate region, in the tire circumferential direction, of each bent element of the second zigzag groove.

In the tire of the present invention, the main groove is preferably disposed so as not to connect to the second zigzag groove.

In the tire of the present invention, the tread portion preferably has a designated tyre rotational direction. The second portion of the first zigzag groove is preferably disposed on a heel side relative to the first portion of the first zigzag groove in the tyre rotational direction.

The tire of the present invention has the zigzag groove formed in the tread portion. The zigzag groove has bent elements which have projections projecting toward the first tread end and which are aligned in the tire circumferential direction. The projections of the bent elements are opened at the first tread end. Thus, water in the first zigzag groove is effectively drained from the first tread end, thereby improving drainage performance.

Furthermore, since the projections of the bent elements are opened at the first tread end, stiffness near the first tread end is reduced, so that an impact sound near the first tread end is lowered to improve noise performance.

Therefore, the tire of the present invention exerts excellent drainage performance and noise performance.

### BRIEF DESCRIPTION OF THE DRAWINGS

FIG. 1 is a development of a tread portion according to one embodiment of the present invention;
FIG. 2 is an enlarged view of a zigzag groove shown in FIG. 1;
FIG. 3 is a development of a projection according to another embodiment;
FIG. 4 is a development of a projection according to still another embodiment; and
FIG. 5 is a development of a tread portion according to another embodiment.

### DESCRIPTION OF THE PREFERRED EMBODIMENTS

An embodiment of the present invention will be described below with reference to the drawings.

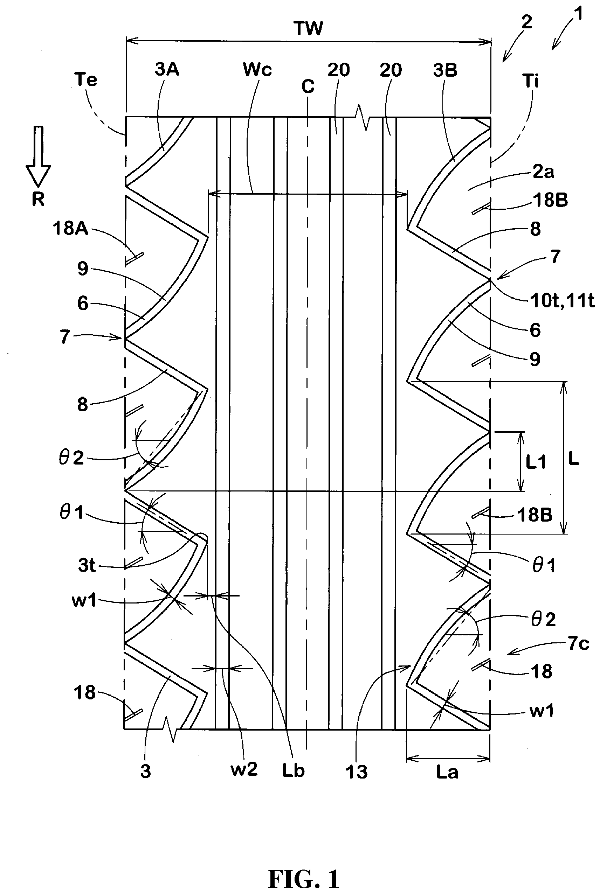

FIG. 1 is a development of a tread portion 2 of a tire 1 of the present embodiment. FIG. 1 shows, as a preferable mode, the tread portion 2 of the pneumatic tire 1 for a passenger car. However, the present invention is also applicable to, for example, a heavy duty pneumatic tire 1 and a tire 1 in another category.

As shown in FIG. 1, in the present embodiment, the tread portion 2 has a first tread end Te (left side in FIG. 1) and a second tread end Ti (right side in FIG. 1). Furthermore, the tread portion 2 has a designated tyre rotational direction R in the present embodiment. The tyre rotational direction R is indicated, for example, on a sidewall portion (not shown) by characters or the like.

The "tread ends" Te and Ti are defined as tire-axially outermost ground contact positions when a normal load is applied to the tire 1 in a normal state in which the tire 1 is mounted on a normal rim and is inflated with air to a normal internal pressure and no load is applied to the tire 1, and the tire 1 is brought into contact with a plane at a camber angle of 0°. A distance in the tire axial direction between the tread ends Te and Ti in the normal state is defined as a tread width TW. Unless otherwise specified, dimensions of components of the tire 1, and the like are represented as values measured in the normal state.

The "normal rim" represents a rim that is defined by a standard, in a standard system including the standard with which the tire 1 complies, for each tire, and is, for example, the "standard rim" in the JATMA standard, the "Design Rim" in the TRA standard, or the "Measuring Rim" in the ETRTO standard.

The "normal internal pressure" represents an air pressure that is defined by a standard, in a standard system including the standard with which the tire 1 complies, for each tire, and is the "maximum air pressure" in the JATMA standard, the maximum value recited in the table "TIRE LOAD LIMITS AT VARIOUS COLD INFLATION PRESSURES" in the TRA standard, or the "INFLATION PRESSURE" in the ETRTO standard. When the tire 1 is for a passenger car, the normal internal pressure is 180 kPa.

The "normal load" represents a load that is defined by a standard, in a standard system including the standard with which the tire 1 complies, for each tire, and is the "maximum load capacity" in the JATMA standard, the maximum value recited in the table "TIRE LOAD LIMITS AT VARIOUS COLD INFLATION PRESSURES" in the TRA standard, or the "LOAD CAPACITY" in the ETRTO standard. When the tire 1 is for a passenger car, the normal load is a load corresponding to 88% of the above-described load.

In the present embodiment, the tread portion 2 has a zigzag groove 3 formed therein. In the present embodiment, the zigzag groove 3 includes a first zigzag groove 3A formed on the first tread end Te side and a second zigzag groove 3B formed on the second tread end Ti side. Hereinafter, in the description herein, the first zigzag groove 3A will be described in detail. For the second zigzag groove 3B, only differences from the first zigzag groove 3A will be described. For the second zigzag groove 3B, the same components as those of the first zigzag groove 3A are denoted by the same reference numerals, and the description thereof may be omitted. The second zigzag groove 3B may have a structure different from the first zigzag groove 3A.

In the first zigzag groove 3A, bent elements 6 each having a projection 7 that projects toward the first tread end Te are aligned in the tire circumferential direction. The projection 7 of each bent element 6 is opened at the first tread end Te. Thus, water in the first zigzag groove 3A is drained from the first tread end Te, thereby improving drainage performance. Furthermore, since the projection 7 of the bent element 6 is opened at the first tread end Te, stiffness near the first tread end Te is reduced, so that an impact sound is lowered near the first tread end Te to improve noise performance.

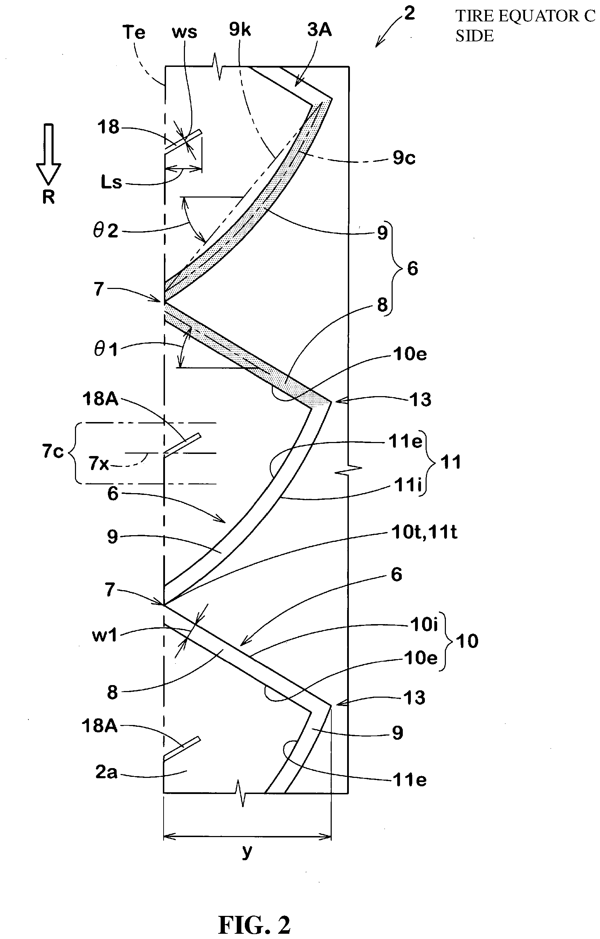

FIG. 2 is an enlarged view of the first zigzag groove 3A shown in FIG. 1. As shown in FIG. 2, the bent element 6 includes a first portion 8 and a second portion 9 that are inclined in the opposite directions. In the present embodiment, the first portion 8 is inclined relative to the tire axial direction toward one side (lower-right side in FIG. 2). In the present embodiment, the second portion 9 is inclined in the direction (upper-right side in FIG. 2) opposite to that of the first portion 8. An intersection of the first portion 8 and the second portion 9 on the first tread end Te side forms the projection 7. In FIG. 2, for convenience sake, one bent element 6 is colored.

In the present embodiment, the first portion 8 has a pair of first groove edges 10 and 10 that extend in the longitudinal direction on both sides in the groove width direction. Each pair of the first groove edges 10 includes a first inner groove edge 10i adjacent to the second portion 9 and a first outer groove edge 10e that faces the first inner groove edge 10i.

In the present embodiment, the second portion 9 has a pair of second groove edges 11 and 11 that extend in the longitudinal direction on both sides in the groove width direction. Each pair of the second groove edges 11 includes a second inner groove edge 11i adjacent to the first portion 8 and a second outer groove edge 11e that faces the second inner groove edge 11i.

An outer end 10t of the first inner groove edge 10i in the tire axial direction and an outer end 11t of the second inner groove edge 11i in the tire axial direction are disposed on the first tread end Te. Thus, stiffness of the tread portion 2 between the first portion 8 and the second portion 9 on the first tread end Te side can be assuredly reduced. Therefore, an effect of lowering the above-described impact sound can be more effectively exerted.

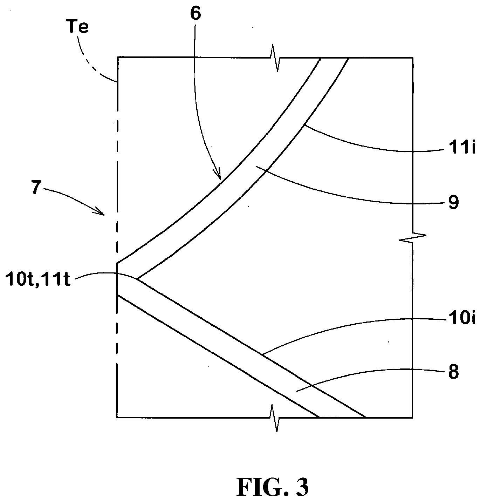

FIG. 3 is a development of the projection 7 according to another embodiment. The same components as described in the above-described embodiment are denoted by the same reference numerals, and the description thereof is omitted. As shown in FIG. 3, the outer end 10t of the first inner groove edge 10i and the outer end 11t of the second inner groove edge 11i are disposed inward of the first tread end Te in the tire axial direction. Also in such a mode, the above-described effect is exerted.

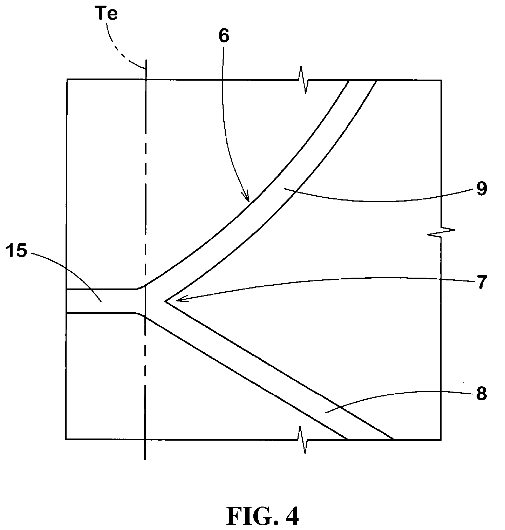

FIG. 4 is a development of the projection 7 according to still another embodiment. The same components as described in the above-described embodiment are denoted by the same reference numerals, and the description thereof is omitted. As shown in FIG. 4, the projection 7 may connect to a lateral groove 15 disposed outward of the first tread end Te in the tire axial direction.

As shown in FIG. 2, in the present embodiment, the first outer groove edge 10e connects to the second outer groove edge 11e of the second portion 9 of the adjacent bent element 6 on one side (lower side in FIG. 2) of the bent element 6 in the tire circumferential direction. Thus, the first portion 8 of the bent element 6, and the second portion 9 of the adjacent bent element 6 on one side of the bent element 6 in the tire circumferential direction form a projection 13 that projects inward in the tire axial direction. The projection 13 having such a structure allows resonance vibration of air occurring in the groove to be disturbed and reduced, thereby improving noise performance.

The second outer groove edge 11e connects to the first outer groove edge 10e of the first portion 8 of the adjacent bent element 6 on the other side (upper side in FIG. 2) of the bent element 6 in the tire circumferential direction. Thus, the second portion 9 of the bent element 6, and the first portion 8 of the adjacent bent element 6 on the other side of the bent element 6 in the tire circumferential direction form the projection 13 that projects inward in the tire axial direction.

In the present embodiment, the first portion 8 extends linearly. The first portion 8 having such a structure allows resistance to water flow in the groove to be reduced.

In the present embodiment, the second portion 9 extends so as to form an arc shape. The second portion 9 having such a structure has a large groove volume, and thus allows air resonance noise in the groove to be disturbed and reduced. By the second portion 9, a water film between a tread surface 2a and a road surface can be collected so as to become large. The second portion 9 has, for example, an arc shape that projects toward the first portion 8. Specifically, in the present embodiment, an angle θ2 of the second portion 9 relative to the tire axial direction is gradually reduced toward the first tread end Te. Thus, during cornering in which a high lateral force acts, water can be smoothly drained from the first tread end Te.

The second portion 9 of the first zigzag groove 3A is inclined onto the heel side in the tyre rotational direction R toward a tire equator C. Specifically, the angle θ2 of the second portion 9 of the first zigzag groove 3A is gradually increased toward the heel side in the tyre rotational direction R. The second portion 9 having such a structure allows water to be smoothly drained on the tire equator C side on which a high contact pressure acts, by rotation of the tire 1.

Each of the angles θ1 and θ2 of the first portion 8 and the second portion 9 relative to the tire axial direction is preferably 30 to 70 degrees. When the angles θ1 and θ2 of the first portion 8 and the second portion 9 are each less than 30 degrees, edges of land portions adjacent to the first portion 8 and the second portion 9 may instantaneously contact with the ground to increase an impact sound at the beginning of ground contact. Meanwhile, at the end of ground contact, air in the first portion 8 or the second portion 9 is instantaneously released, and an air pumping sound may thus be increased. When the angles θ1 and θ2 of the first portion 8 and the second portion 9 relative to the tire axial direction are each not less than 30 degrees, the edges of the land portions adjacent to the first portion 8 and the second portion 9 can be gradually brought into contact with the ground at the beginning of ground contact to reduce an impact sound. At the end of ground contact, air in the first portion 8 or the second portion 9 can be gradually released to reduce an air pumping sound. When the angles θ1 and θ2 of the first portion 8 and the second portion 9 are each greater than 70 degrees, a formation range La, in the tire axial direction, in which the first zigzag groove 3A is formed is reduced, and a water film between the tread surface 2a of the tread portion 2 and a road surface may not be effectively drained. In the description herein, the angle θ2 of the second portion 9 that extends so as to form an arc shape is an angle of an imaginary line 9k that is a straight line connecting between both ends, in the tire radial direction, of a groove center line 9c of the second portion 9.

In order to effectively exert the above-described effect, the formation range La of the first zigzag groove 3A in the tire axial direction is preferably 20% to 30% of the tread width TW (shown in FIG. 1). In a case where the formation range La of the first zigzag groove 3A in the tire axial direction is greater than 30% of the tread width TW, when, for example, the angles θ1 and θ2 of the first portion 8 and the second portion 9 are the same, a length L of the bent element 6 in the tire circumferential direction is increased. Thus, the number of each of the projections 7 and the projections 13 of the bent element 6 is reduced, and noise performance may be degraded. In order to inhibit degradation of noise performance, the formation range La of the first zigzag groove 3A in the tire axial direction is more preferably not greater than 25% of the tread width TW.

The angle θ2 of the second portion 9 is preferably greater than the angle θ1 of the first portion 8. The first portion 8 that extends linearly has a drainage resistance that is less than the second portion 9 that extends so as to form an arc shape. Therefore, by the angle θ2 of the second portion 9 being increased, smooth water flow in the second portion 9 can be assured by utilizing the rotation of the tire 1. From this viewpoint, a difference (θ2-θ1) between the angle θ2 of the second portion 9 and the angle θ1 of the first portion 8 is preferably 10 to 30 degrees.

The first zigzag groove 3A having such a structure preferably has a groove width w1 that is, for example, 1% to 4% of the tread width TW. The first zigzag groove 3A preferably has a groove depth (not shown) that is, for example, 2 to 8 mm.

As shown in FIG. 1, the projection 7 of the first zigzag groove 3A and the projection 7 of the second zigzag groove 3B are disposed at different positions in the tire circumferential direction. Thus, an air pumping sound from the projection 7 of the first zigzag groove 3A and an air pumping sound from the projection 7 of the second zigzag groove 3B are generated at different timings to reduce noise.

In order to effectively exert the above-described effect, a distance L1 over which the projection 7 of the first zigzag groove 3A and the projection 7 of the second zigzag groove 3B are distant from each other in the tire circumferential direction is preferably 15% to 35% of the length L of the bent element 6 in the tire circumferential direction.

The second portion 9 of the second zigzag groove 3B is inclined onto the heel side in the tyre rotational direction R toward the second tread end Ti. The angle θ2 of the second portion 9 is gradually reduced toward the second tread end Ti. Therefore, water can be smoothly drained from the second tread end Ti by utilizing a lateral force during cornering.

In the present embodiment, the second portion 9 of the first zigzag groove 3A is disposed on the heel side relative to the first portion 8 of the first zigzag groove 3A in the tyre rotational direction R. In the present embodiment, the first portion 8 of the second zigzag groove 3B is disposed on the heel side relative to the second portion 9 of the second zigzag groove 3B in the tyre rotational direction R. Thus, in the present embodiment, by utilizing rotation of the tire 1, water is drained mainly from the first portion 8 in the first zigzag groove 3A whereas water is drained mainly from the second portion 9 in the second zigzag groove 3B. However, the second zigzag groove 3B is not limited thereto. For example, the second portion 9 of the second zigzag groove 3B may be inclined onto the heel side in the tyre rotational direction R toward the tire equator C (not shown).

As shown in FIGS. 1 and 2, in the present embodiment, the tread portion 2 has sipes 18 each having a width ws of not greater than 1 mm. Each sipe 18 allows stiffness of the tread portion 2 to be appropriately reduced and allows impact on the land portion to be reduced during ground contact, thereby improving noise performance. A length Ls, in the tire axial direction, of the sipe 18 having such a structure is preferably 10% to 80% of an amplitude y of the zigzag of the first zigzag groove 3A. The depth (not shown) of the sipe 18 is preferably 50% to 100% of the groove depth (not shown) of the first zigzag groove 3A. In the present embodiment, the sipe 18 is inclined relative to the tire axial direction. For example, the sipe 18 may extend parallel to the tire axial direction. The "amplitude y" is equal to the formation range La of the first zigzag groove 3A in the tire axial direction. In the description herein, the sipe 18 is clearly distinguished from each groove having a groove width of greater than 1 mm.

In the present embodiment, the sipes 18 include first sipes 18A each of which is disposed in an intermediate region 7c between the projections 7 and 7, of the first zigzag groove 3A, which are adjacent to each other in the tire circumferential direction, and second sipes 18B each of which is disposed in an intermediate region 7c between the projections 7 and 7, of the second zigzag groove 3B, which are adjacent to each other in the tire circumferential direction. The "disposed in the intermediate region 7c" means that the mid-position of the sipe 18 in the tire axial direction is disposed in a positional range that extends from a mid-position 7x between the projections 7 (the outer ends 10t of the first inner groove edges 10i) in the tire circumferential direction toward each side in the tire circumferential direction over a distance of not greater than 10% of the length L of the bent element 6 in the tire circumferential direction. In the present embodiment, the first sipe 18A is disposed closer to the first tread end Te than the first zigzag groove 3A. For example, the first sipe 18A connects to the first tread end Te. In the present embodiment, the second sipe 18B is disposed closer to the second tread end Ti than the second zigzag groove 3B. For example, the second sipe 18B connects to the second tread end Ti. In the present embodiment, the tread portion 2 preferably has a tread pattern that is point-symmetric about any point on the tire equator C.

The tread portion 2 has one or more main grooves 20 that extend continuously in the tire circumferential direction. In the present embodiment, the tread portion 2 has four main grooves 20 formed therein. For example, the main grooves 20 linearly extend so as to be parallel to the tire circumferential direction. The main groove 20 having such a structure improves drainage performance.

The main grooves 20 do not connect to the first zigzag groove 3A. Thus, air resonance noise in the main groove 20 is not transmitted into the first zigzag groove 3A. Therefore, high noise performance is maintained. Preferably, a distance Lb in the tire axial direction between the main groove 20 and an inner end 3t of the first zigzag groove 3A in the tire axial direction is, but is not particularly limited to, 20% to 70% of a groove width w2 of the main groove 20.

Preferably, the groove width w2 of the main groove 20 is, but is not particularly limited to, 4% to 12% of a distance Wc in the tire axial direction between the first zigzag groove 3A and the second zigzag groove 3B. The groove depth (not shown) of the main groove 20 is preferably 130% to 170% of the groove depth of the first zigzag groove 3A.

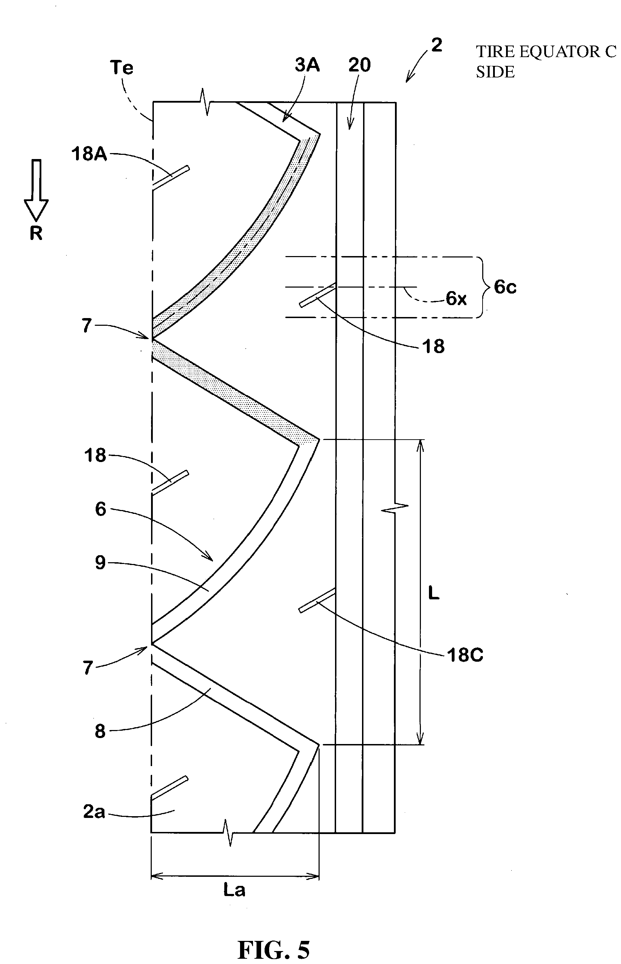

FIG. 5 is an enlarged view of the tread portion 2 according to another embodiment. In FIG. 5, the same components as shown in FIG. 1 are denoted by the same reference numerals, and the detailed description thereof is omitted. As shown in FIG. 5, in the present embodiment, the sipes 18 include third sipes 18C each of which is disposed in an intermediate region 6c, in the tire circumferential direction, of the bent element 6 of the first zigzag groove 3A. The third sipe 18C having such a structure also reduces impact on the land portion during ground contact to improve noise performance. The sipes 18 may include fourth sipes (not shown) each of which is disposed in an intermediate region 6c, in the tire circumferential direction, of the bent element 6 of the second zigzag groove 3B. The sipes 18 may include the third sipes 18C and the fourth sipes without including the first sipes 18A and the second sipes 18B (not shown). The "disposed in the intermediate region 6c" means that the mid-position of the sipe 18 in the tire axial direction is disposed in a positional range that extends from a mid-position 6x of the bent element 6 in the tire circumferential direction toward each side in the tire circumferential direction over a distance of not greater than 10% of the length L of the bent element 6 in the tire circumferential direction.

The third sipe 18C is, for example, disposed closer to the tire equator C than the first zigzag groove 3A is. In the present embodiment, the third sipe 18C is distant from the first zigzag groove 3A. In the present embodiment, the third sipe 18C connects to the main groove 20. Thus, the above-described effect is more effectively exerted. The third sipe 18C may not connect to the main groove 20. The fourth sipe is, for example, disposed closer to the tire equator C than the second zigzag groove 3B is. Preferably, the tread portion 2 of the present embodiment also has a tread pattern that is point-symmetric about any point on the tire equator C.

Although the tire according to the present invention has been described above in detail, the present invention is not limited to the above-described specific embodiments, and it is needless to say that various modifications can be made to implement the present invention.

### [Examples]

Tires having a basic pattern shown in FIG. 1 and having the size of 215/60R16 were produced as sample tires according to the specifications indicated in Table 1. Each sample tire was tested for drainage performance and noise performance. The specifications common to the sample tires and the test method are as follows.

Groove depth of the main groove: 8 mm

Groove depth of each of the first zigzag groove and the second zigzag groove: 6 mm

Shape of the first portion: linear shape

"Opening position of projection" in Table 1 represents opening positions of the projection of the first zigzag groove and the projection of the second zigzag groove.

"Tread end" in Table 1 means that the projection of the first zigzag groove was opened at the first tread end and the projection of the second zigzag groove was opened at the second tread end.

The groove widths were adjusted such that sea ratios were the same among comparative example and examples. The sea ratio represents a ratio of grooves disposed in the tread portion relative to the entirety of the outer surface of the tread portion.

### <Drainage performance>

The sample tires were mounted to all wheels of a passenger car. A test driver drove the car on a wet road, in a test course, having a water depth of 2 mm, and, at this time, made sensory evaluation for running characteristics such as presence or absence of a hydroplaning phenomenon, braking performance, high-speed stability, and cornering performance. The results are indicated as scores with the score of comparative example 1 being 100. The greater the value is, the better the performance is.
Rim (all wheels): 16×6.5JJ
Internal pressure (all wheels): 240 kPa

### <Noise performance>

The test driver drove the above-described vehicle on a dry road in a test course, and, at this time, made sensory evaluation for noise generated in the tire. The results are indicated as scores with the score of comparative example 1 being 100. The greater the value is, the better the performance is.

Test results are indicated in Table 1

**[Table 1]**

| | Comparative example 1 | Example 1 | Example 2 | Example 3 | Example 4 |
|---|---|---|---|---|---|
| Opening position of projection | Land portion | Tread end | Tread end | Tread end | Tread end |
| Shape of second portion | Arc | Arc | Linear | Arc | Arc |
| Angle θ1 (degrees) of first portion = θ2 (degrees) of second portion | 20 | 56 | 56 | 30 | 70 |
| Drainage performance | 100 | 120 | 120 | 110 | 125 |
| [Score The greater the value is, the better the performance is] | | | | | |
| Noise performance | 100 | 115 | 115 | 105 | 120 |
| [Score The greater the value is, the better the performance is] | | | | | |

According to the test results, it can be confirmed that the performances were improved in a well-balanced manner in the tires of the examples as compared with the tire of the comparative example. Furthermore, the test was made with a different tire size. The test results were the same as described above.

## Claims

1. A tire (1) comprising
a tread portion (2) having a first tread end (Te); wherein
the tread portion (2) has a first zigzag groove (3A) formed on the first tread end (Te) side and a main groove (20) extending continuously in a tire circumferential direction,
the first zigzag groove (3A) has bent elements (6) which have projections (7) projecting toward the first tread end (Te) and which are aligned in the tire circumferential direction,
each bent element (6) has a first portion (8) and a second portion (9) that are inclined in opposite directions, and an intersection of the first portion (8) and the second portion (9) on the first tread end (Te) side forms the projection (7), wherein
the projections (7) of the bent elements (6) are opened at the first tread end (Te), **characterized in that** the main groove (20) is disposed so as not to connect to the first zigzag groove (3A) to avoid transmitting air resonance noise in the main groove (20) into the first zigzag groove (3A).

2. The tire (1) according to claim 1, wherein
the first portion (8) has a first inner groove edge (10i) adjacent to the second portion (9),
the second portion (9) has a second inner groove edge (11i) adjacent to the first portion (8), and
an outer end (10t) of the first inner groove edge (10i) in a tire axial direction and an outer end (11t) of the second inner groove edge (11i) in the tire axial direction are disposed on the first tread end (Te) or disposed inward of the first tread end (Te) in the tire axial direction.

3. The tire (1) according to claim 1 or 2, wherein an angle (θ1, θ2) of each of the first portion (8) and the second portion (9) relative to the tire axial direction is 30 to 70 degrees.

4. The tire (1) according to any one of claims 1 to 3, wherein the first portion (8) extends linearly.

5. The tire (1) according to any one of claims 1 to 4, wherein the second portion (9) has an arc shape that projects toward the first portion (8) in each of the bent elements (6).

6. The tire (1) according to any one of claims 1 to 5, wherein a formation range (La) of the first zigzag groove (3A) in the tire axial direction is 20% to 30% of a tread width (TW).

7. The tire (1) according to any one of claims 1 to 6, wherein
the tread portion (2) has a sipe (18) having a width of not greater than 1 mm, and
the sipe (18A) is disposed in an intermediate region (7c) between the projections (7), of the first zigzag groove (3A), which are adjacent to each other in the tire circumferential direction.

8. The tire (1) according to any one of claims 1 to 7, wherein
the tread portion (2) has a sipe (18) having a width of not greater than 1 mm, and
the sipe (18C) is disposed in an intermediate region (6c), in the tire circumferential direction, of each bent element (6) of the first zigzag groove (3A).

9. The tire (1) according to any one of claims 1 to 8, wherein
the tread portion (2) further includes a second tread end (Ti),
the tread portion (2) has a second zigzag groove (3B) formed on the second tread end (Ti) side,
the second zigzag groove (3B) has bent elements (6) which have projections (7) projecting toward the second tread end (Ti) and which are aligned in the tire circumferential direction, and
the projections (7) of the first zigzag groove (3A) and the projections (7) of the second zigzag groove (3B) are disposed at different positions in the tire circumferential direction.

10. The tire (1) according to claim 9, wherein
the tread portion (2) has a sipe (18) having a width of not greater than 1 mm, and
the sipe (18B) is disposed in an intermediate region (7c) between the projections (7), of the second zigzag groove (3B), which are adjacent to each other in the tire circumferential direction.

11. The tire (1) according to claim 9 or 10, wherein
the tread portion (2) has a sipe (18) having a width of not greater than 1 mm, and
the sipe (18) is disposed in an intermediate region, in the tire circumferential direction, of each bent element (6) of the second zigzag groove (3B).

12. The tire (1) according to any one of claims 9 to 11, wherein
the main groove (20) is disposed so as not to connect to the second zigzag groove (3B).

13. The tire (1) according to any one of claims 1 to 12, wherein
the tread portion (2) has a designated tyre rotational direction (R), and
the second portion (9) of the first zigzag groove (3A) is disposed on a heel side relative to the first portion (8) of the first zigzag groove (3A) in the tyre rotational direction (R).

## Patentansprüche

1. Reifen (1), umfassend
einen Laufflächenabschnitt (2) mit einem ersten Laufflächenende (Te); wobei
der Laufflächenabschnitt (2) eine erste Zickzack-Rille (3A) aufweist, die auf der Seite des ersten Laufflächenendes (Te) ausgebildet ist, und eine Hauptrille (20), die sich kontinuierlich in einer Reifenumfangsrichtung erstreckt,
die erste Zickzack-Rille (3A) gebogene Elemente (6) aufweist, die in Richtung des ersten Laufflächenendes (Te) vorstehende Vorsprünge (7) aufweisen und die in der Reifenumfangsrichtung ausgerichtet sind,
jedes gebogene Element (6) einen ersten Abschnitt (8) und einen zweiten Abschnitt (9) aufweist, die in entgegengesetzte Richtungen geneigt sind, und ein Schnittpunkt des ersten Abschnitts (8) und des zweiten Abschnitts (9) auf der Seite des ersten Laufflächenendes (Te) die Vorsprünge (7) bildet, wobei
die Vorsprünge (7) der gebogenen Elemente (6) am ersten Laufflächenflächenende (Te) geöffnet sind,
**dadurch gekennzeichnet, dass** die Hauptrille (20) so angeordnet ist, dass sie sich nicht mit der ersten Zickzackrille (3A) verbindet, um die Übertragung von Luftresonanzgeräuschen in der Hauptrille (20) in die erste Zickzackrille (3A) zu vermeiden.

2. Reifen (1) nach Anspruch 1, wobei
der erste Abschnitt (8) eine erste innere Rillenkante (10i) aufweist, die an den zweiten Abschnitt (9) angrenzt,
der zweite Abschnitt (9) eine zweite innere Rillenkante (11i) aufweist, die an den ersten Abschnitt (8) angrenzt, und
ein äußeres Ende (10t) der ersten inneren Rillenkante (10i) in einer Reifenaxialrichtung und ein äußeres Ende (11t) der zweiten inneren Rillenkante (11i) in der Reifenaxialrichtung an dem ersten Laufflächenende (Te) angeordnet sind oder in der Reifenaxialrichtung innen von dem ersten Laufflächenende (Te) angeordnet sind.

3. Reifen (1) nach Anspruch 1 oder 2, wobei ein Winkel (θ1, θ2) eines jeden von dem ersten Abschnitt (8) und dem zweiten Abschnitt (9) relativ zur Reifenaxialrichtung 30 bis 70 Grad beträgt.

4. Reifen (1) nach einem der Ansprüche 1 bis 3, wobei der erste Abschnitt (8) gerade verläuft.

5. Reifen (1) nach einem der Ansprüche 1 bis 4, wobei der zweite Abschnitt (9) eine Bogenform aufweist, die in Richtung des ersten Abschnitts (8) in jedem der gebogenen Elemente (6) vorsteht.

6. Reifen (1) nach einem der Ansprüche 1 bis 5, wobei ein Bereich (La) der Ausbildung der ersten Zickzack-Rille (3A) in der Reifenaxialrichtung 20 % bis 30 % einer Laufflächenbreite (TW) beträgt.

7. Reifen (1) nach einem der Ansprüche 1 bis 6, wobei
der Laufflächenabschnitt (2) einen Feinschnitt (18) mit einer Breite von nicht mehr als 1 mm aufweist, und
der Feinschnitt (18A) in einem Zwischenbereich (7c) zwischen den Vorsprüngen (7) der ersten Zickzack-Rille (3A), die in der Reifenumfangsrichtung benachbart sind, angeordnet ist.

8. Reifen (1) nach einem der Ansprüche 1 bis 7, wobei
der Laufflächenabschnitt (2) einen Feinschnitt (18) mit einer Breite von nicht mehr als 1 mm aufweist, und
der Feinschnitt (18C) in einem Zwischenbereich (6c), in der Reifenumfangsrichtung, jedes gebogenen Elements (6) der ersten Zickzack-Rille (3A) angeordnet ist.

9. Reifen (1) nach einem der Ansprüche 1 bis 8, wobei
der Laufflächenabschnitt (2) ferner ein zweites Laufflächenende (Ti) aufweist,
der Laufflächenabschnitt (2) eine zweite Zickzack-Rille (3B) aufweist, die auf der Seite des zweiten Laufflächenendes (Ti) ausgebildet ist,
die zweite Zickzackrille (3B) gebogene Elemente (6) aufweist, die in Richtung des zweiten Laufflächenendes (Ti) vorstehende Vorsprünge (7) aufweisen und in der Reifenumfangsrichtung ausgerichtet sind, und
die Vorsprünge (7) der ersten Zickzack-Rille (3A) und die Vorsprünge (7) der zweiten Zickzack-Rille (3B) an unterschiedlichen Positionen in der Reifenumfangsrichtung angeordnet sind.

10. Reifen (1) nach Anspruch 9, wobei
der Laufflächenabschnitt (2) einen Feinschnitt (18) mit einer Breite von nicht mehr als 1 mm aufweist, und
der Feinschnitt (18B) in einem Zwischenbereich (7c) zwischen den Vorsprüngen (7) der zweiten Zickzack-Rille (3B), die in der Reifenumfangsrichtung benachbart sind, angeordnet ist.

11. Reifen (1) nach Anspruch 9 oder 10, wobei
der Laufflächenabschnitt (2) einen Feinschnitt (18) mit einer Breite von nicht mehr als 1 mm aufweist, und
der Feinschnitt (18) in einem Zwischenbereich, in der Reifenumfangsrichtung, jedes gebogenen Elements (6) der zweiten Zickzack-Rille (3B) angeordnet ist.

12. Reifen (1) nach einem der Ansprüche 9 bis 11, wobei die Hauptrille (20) so angeordnet ist, dass sie sich nicht mit der zweiten Zickzack-Rille (3B) verbindet.

13. Reifen (1) nach einem der Ansprüche 1 bis 12, wobei
der Laufflächenabschnitt (2) eine vorgegebene Reifendrehrichtung (R) aufweist, und
der zweite Abschnitt (9) der ersten Zickzack-Rille (3A) auf einer Fersenseite relativ zu dem ersten Abschnitt (8) der ersten Zickzack-Rille (3A) in der Reifendrehrichtung (R) angeordnet ist.

## Revendications

1. Pneumatique (1) comprenant :
une portion formant bande de roulement (2) ayant une première extrémité de bande de roulement (Te) ; dans lequel
la portion formant bande de roulement (2) a une première rainure en zigzag (3A) formée sur le côté de la première extrémité de bande de roulement (Te) et une rainure principale (20) s'étendant en continu dans une direction circonférentielle du pneumatique,
la première rainure en zigzag (3A) a des éléments cintrés (6) qui ont des projections (7) se projetant vers la première extrémité de bande de roulement (Te) et qui sont alignés dans la direction circonférentielle du pneumatique,
chaque élément cintré (6) a une première portion (8) et une seconde portion (9) qui sont inclinées dans des directions opposées, et une intersection de la première portion (8) et de la seconde portion (9) sur le côté de la première extrémité de bande de roulement (Te) forme la projection (7), dans lequel
les projections (7) des éléments cintrés (6) sont ouvertes au niveau de la première extrémité de bande de roulement (Te),
**caractérisé en ce que** la rainure principale (20) est disposée de manière à ne pas connecter la première rainure en zigzag (3A) pour éviter de transmettre un bruit de résonance d'air dans la rainure principale (20) jusque dans la première rainure en zigzag (3A).

2. Pneumatique (1) selon la revendication 1, dans lequel
la première portion (8) a un premier bord de rainure intérieur (10i) adjacent à la seconde portion (9),
la seconde portion (9) a un second bord de rainure intérieur (11i) adjacent à la première portion (8), et
une extrémité extérieure (10t) du premier bord de rainure intérieur (10i) dans une direction axiale du pneumatique et une extrémité extérieure (11t) du second bord de rainure intérieur (11i) dans la direction axiale du pneumatique sont disposées sur la première extrémité de bande de roulement (Te) ou sont disposées à l'intérieur de la première extrémité de bande de roulement (Te) dans la direction axiale du pneumatique.

3. Pneumatique (1) selon la revendication 1 ou 2, dans lequel un angle (θ1, θ2) de chaque portion parmi la première portion (8) et la seconde portion (9) relativement à la direction axiale du pneumatique est de 30 à 70°.

4. Pneumatique (1) selon l'une quelconque des revendications 1 à 3, dans lequel la première portion (8) s'étend linéairement.

5. Pneumatique (1) selon l'une quelconque des revendications 1 à 4, dans lequel la seconde portion (9) a une forme d'arc qui se projette vers la première portion (8) dans chacun des éléments cintrés (6).

6. Pneumatique (1) selon l'une quelconque des revendications 1 à 5, dans lequel une plage de formation (La) de la première rainure en zigzag (3A) dans la direction axiale du pneumatique est de 20 % à 30 % d'une largeur de bande de roulement (TW).

7. Pneumatique (1) selon l'une quelconque des revendications 1 à 6, dans lequel
la portion formant bande de roulement (2) a une fente (18) ayant une largeur qui n'est pas supérieure à 1 mm, et
la fente (18A) est disposée dans une région intermédiaire (7c) entre les projections (7) de la première rainure zigzag (3A), qui sont mutuellement adjacentes dans la direction circonférentielle du pneumatique.

8. Pneumatique (1) selon l'une quelconque des revendications 1 à 7, dans lequel
la portion formant bande de roulement (2) a une fente (18) ayant une largeur qui n'est pas supérieure à 1 mm, et
la fente (18C) est disposée dans une région intermédiaire (6c), dans la direction circonférentielle du pneumatique, de chaque élément cintré (6) de la première rainure en zigzag (3A).

9. Pneumatique (1) selon l'une quelconque des revendications 1 à 8, dans lequel
la portion formant bande de roulement (2) inclut en outre une seconde extrémité de bande de roulement (Ti),
la portion formant bande de roulement (2) a une seconde rainure en zigzag (3B) formée sur le côté de la seconde extrémité de bande de roulement (Ti),
la seconde rainure en zigzag (3B) a des éléments cintrés (6) qui ont des projections (7) se projetant vers la seconde extrémité de bande de roulement (Ti) et qui sont alignés dans la direction circonférentielle du pneumatique, et
les projections (7) de la première rainure en zigzag (3A) et les projections (7) de la seconde rainure en zigzag (3B) sont disposées à des positions différentes dans la direction circonférentielle du pneumatique.

10. Pneumatique (1) selon la revendication 9, dans lequel
la portion formant bande de roulement (2) a une fente (18) ayant une largeur qui n'est pas supérieure à 1 mm, et
la fente (18B) est disposée dans une région intermédiaire (7c) entre les projections (7) de la seconde rainure en zigzag (3B), qui sont mutuellement adjacentes dans la direction circonférentielle du pneumatique.

11. Pneumatique (1) selon la revendication 9 ou 10, dans lequel
la portion formant bande de roulement (2) a une fente (18) qui a une largeur qui n'est pas supérieure à 1 mm, et
la fente (18) est disposée dans une région intermédiaire, dans la direction circonférentielle du pneumatique, de chaque élément cintré (6) de la seconde rainure en zigzag (3B).

12. Pneumatique (1) selon l'une quelconque des revendications 9 à 11, dans lequel
la rainure principale (20) est disposée de manière à ne pas connecter la seconde rainure en zigzag (3B).

13. Pneumatique (1) selon l'une quelconque des revendications 1 à 12, dans lequel
la portion formant bande de roulement (2) a une direction de rotation du pneumatique par conception (R), et
la seconde portion (9) de la première rainure en zigzag (3A) est disposée sur un côté talon relativement à la première portion (8) de la première portion en zigzag (3A) dans la direction de rotation du pneumatique (R).
